(19) Europäisches Patentamt
European Patent Office
Office européen des brevets

(11) **EP 4 304 171 A1**

(12) **EUROPEAN PATENT APPLICATION**

(43) Date of publication:
**10.01.2024 Bulletin 2024/02**

(21) Application number: **22306003.9**

(22) Date of filing: **05.07.2022**

(51) International Patent Classification (IPC):
*H04N 19/11* (2014.01)     *H04N 19/136* (2014.01)
*H04N 19/174* (2014.01)     *H04N 19/176* (2014.01)
*H04N 19/593* (2014.01)     *H04N 19/70* (2014.01)

(52) Cooperative Patent Classification (CPC):
**H04N 19/593; H04N 19/11; H04N 19/136;
H04N 19/174; H04N 19/176; H04N 19/70**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventors:
• **LE LEANNEC, Fabrice**
  **35830 BETTON (FR)**
• **ANDRIVON, Pierre**
  **35340 LIFFRE (FR)**
• **RADOSAVLJEVIC, Milos**
  **35000 RENNES (FR)**

(74) Representative: **RVDB Rennes**
  **44 rue Lariboisière**
  **35235 Thorigné-Fouillard (FR)**

(54) **ENCODING/DECODING VIDEO PICTURE DATA**

(57) The present application relates to predicting a block of a video picture comprising signaling an intra-block-copy mode type indicating whether an intra-block-copy prediction mode is configured to predict camera-captured video content or not; when the intra-block-copy mode type indicates that the intra-block-copy prediction mode is configured to predict camera-captured video content, configuring the intra-block-copy prediction mode to predict the block of the video picture and deriving a predicted block of the block of the video picture based on the configured intra-block-copy mode prediction mode.

**Fig. 10**

Processed by Luminess, 75001 PARIS (FR)

EP 4 304 171 A1

**Description**

<u>FIELD</u>

The present application generally relates to video picture encoding and decoding. Particularly, but not exclusively, the technical field of the present application is related to intra-block-copy based prediction of a video picture block.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in the Sequence Parameter Set (SPS).

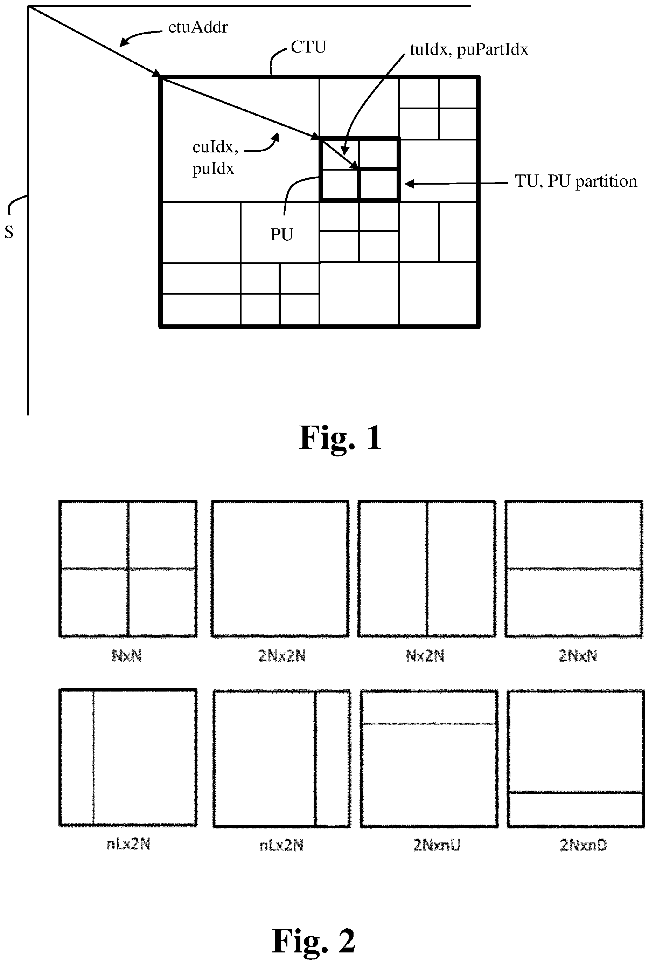

The spatial position of a CTU in a CTU grid is determined from a CTU address **ctuAddr** defining a spatial position of the top-left corner of a CTU from an origin. As illustrated on **Figure 1**, the CTU address may define the spatial position from the top-left corner of a higher-level spatial structure S containing the CTU.

A coding tree is associated with each CTU to determine a tree-division of the CTU.

As illustrated on **Figure 1**, in HEVC, the coding tree is a quad-tree division of a CTU, where each leaf is called a Coding Unit (CU). The spatial position of a CU in the video picture is defined by a CU index **cuIdx** indicating a spatial position from the top-left corner of the CTU. A CU is spatially partitioned into one or more Prediction Units (PU). The spatial position of a PU in the video picture VP is defined by a PU index **puIdx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuIdx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

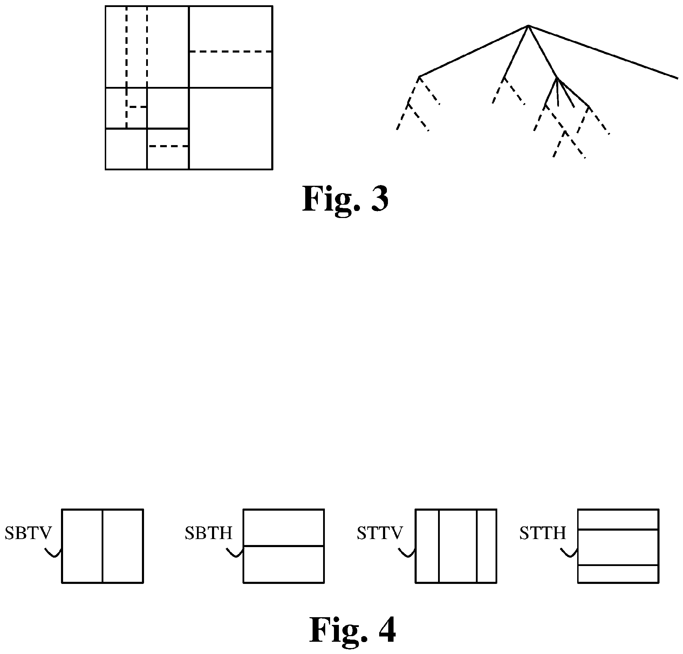

As illustrated on **Figure 3**, in VVC, the coding tree starts from a root node, i.e. the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

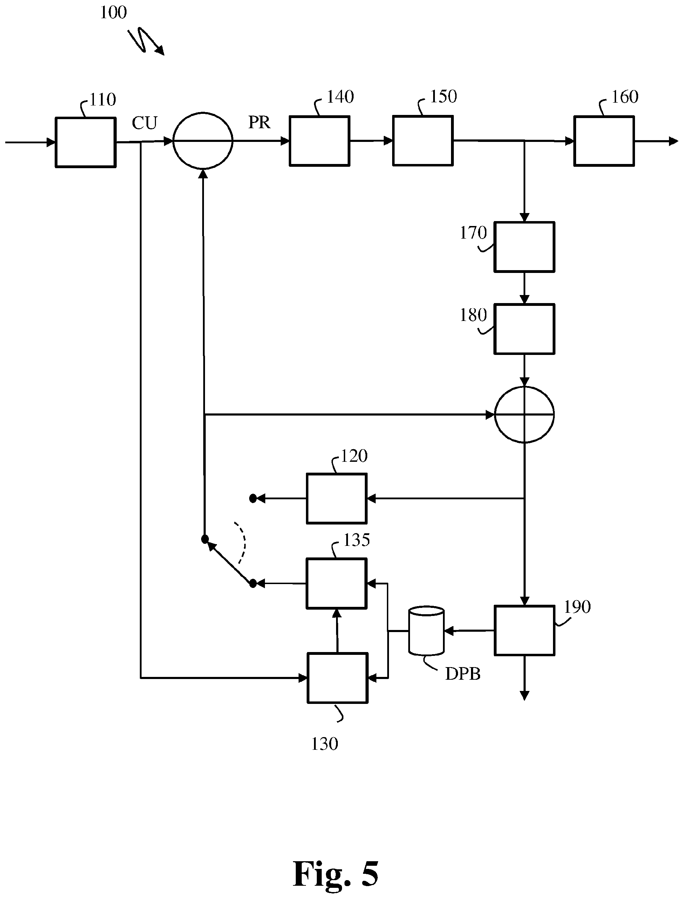

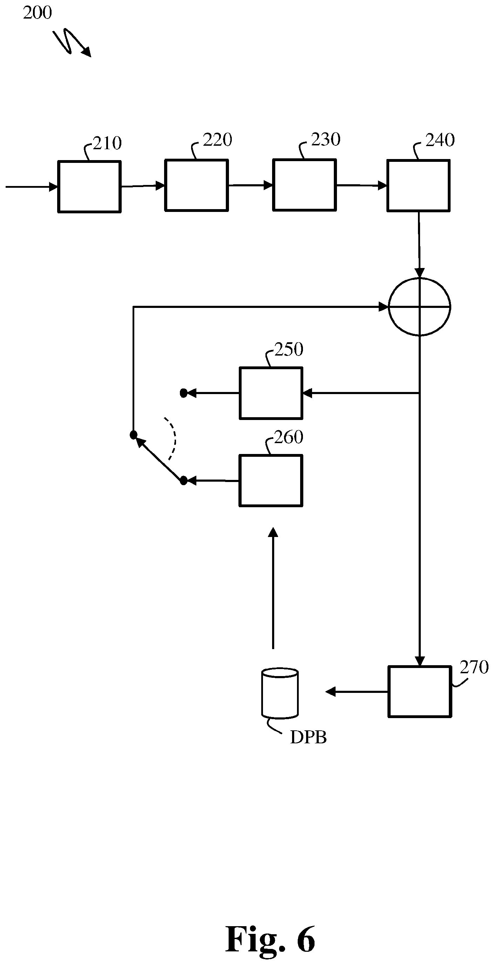

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is inter-prediction data comprising motion information (typically one or more motion vectors and one or more reference video picture indices) associated to the current block and other information used for obtaining a same predicted block at the encoding/decoding side. Next, motion compensation (step 135) obtains a predicted block by means of the motion vector(s) and reference video picture index (indices) determined by the motion estimation step 130. Basically, the block belonging to a selected reference video picture and pointed to by a motion vector may be used as the predicted block of the current block. Furthermore, since motion vectors are expressed in fractions of integer pixel positions (which is known as sub-pel MV accuracy representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \underset{p \in P}{\mathrm{Argmin}}\{RD_{cost}(p)\} \quad (1)$$

where P is the set of all candidate coding modes for the current block, $p$ represents a candidate coding mode in that set, $RD_{cost}(p)$ is a rate-distortion cost of candidate coding mode p, typically expressed as:

$$RD_{cost(p)} = D(p) + \lambda . R(p)$$

$D(p)$ is the distortion between the current block and a reconstructed block obtained after encoding/decoding the current block with the candidate coding mode p, $R(p)$ is a rate cost associated with the coding of the current block with coding mode p, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure** 6 shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks or the filtered reconstructed blocks form a reference picture that may be stored into a decoded picture buffer (DPB) as above discussed (**Figure 5**).

In step 130/135 of **Figure 5** or step 260 of **Figure 6**, an inter-predicted block is defined from inter-prediction data associated with the current block (CU or a PU of a CU) of a video picture. This inter-prediction data comprises motion information that may be represented (coded) according to the so-called AMVP mode (Adaptive Motion Vector Prediction) or the so-called merge mode.

In HEVC, in the AMVP mode, the motion information used to define an inter-predicted block is represented by up-to 2 reference video picture indices respectively associated to up-to 2 reference video picture lists usually denoted L0 and L1. The reference video picture reference list L0 comprises at least one reference video picture and the reference video picture reference list L1 comprises at least one reference video picture. Each reference video picture index is relative to a temporal prediction of the current block. The motion information further comprises up-to 2 motion vectors, each associated with a reference video picture index of one of the two reference video picture lists. Each motion vector is predictively encoded and signaled into the bitstream, i.e. one motion vector difference MVd is derived from the motion vector and one AMVP (Adaptative Motion Vector Predictor) candidate selected from a AMVP candidate list (built at the encoding and decoding side) and MVd is signaled into the bitstream. The AMVP candidate index of a selected AMVP candidate in the AMVP candidate list is also signaled in the bitstream.

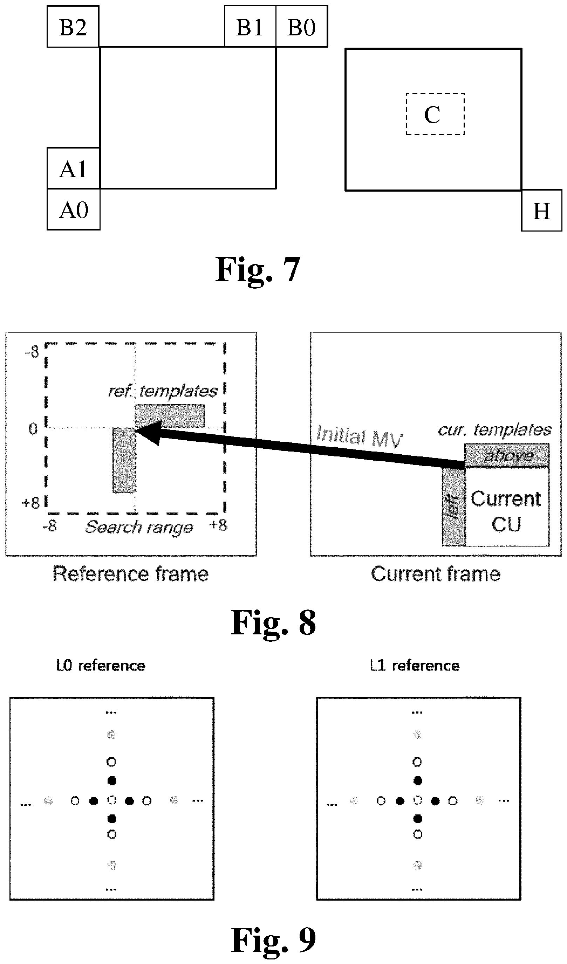

**Figure 7** shows an illustrative example for building a AMVP candidate list used to define an inter-predicted block of a current block of a current video picture.

The AMVP candidate list may comprise two spatial MVP (Motion Vector Predictor) candidates that are derived from the current video picture. A first spatial MVP candidate is derived from motion information associated with inter-predicted blocks, if exist, located at left neighboring positions A0, A1 of the current block, and a second MVP candidate is derived from motion information associated with inter-predicted blocks, if exist, located at top neighboring positions B0, B1 and B2 of the current block. A redundancy check is then conducted between derived spatial MVP candidates, i.e. duplicate derived MVP candidates are discarded. The AMVP candidate list may further comprise a temporal MVP candidate that is derived from motion information associated with a co-located block, if exits, in the reference video picture at spatial position H, or at spatial position C otherwise. The temporal MVP candidate is scaled according to the temporal distances between the current video picture and the reference video picture. Finally, if the AMVP candidate list comprises less than 2 MVP candidates then the AMVP candidate list is padded with zero motion vectors.

In HEVC, in the merge mode, the motion information used to define an inter-predicted block is represented by one merge index of a merge MVP candidate list. Each merge index refers to motion predictor information that indicates which MVP is used to derive the motion information. The motion information is represented by one uni-directional or bi-directional temporal prediction type, up-to 2 reference video picture indices and up-to 2 motion vectors, each associated with a reference video picture index of one of the two reference video picture lists (L0 or L1).

No other information is signaled apart from the merge index. This means the motion vector of current block is set equal to that of the MVP candidate indicated by the merge index. Therefore, as opposed to the merge mode, no MVd and no reference picture index is signaled into the bitstream. Only the index of a selected merge candidate in the merge candidate list is also signaled in the bitstream.

Therefore, as opposed to the AMVP mode, no MVd and no reference picture are signaled in the merge mode. Only the merge index is signaled into the bitstream.

The merge MVP candidate list may comprise five spatial MVP candidates that are derived from the current video picture as illustrated on **Figure 7.** A first spatial MVP candidate is derived from motion information associated with an inter-predicted block, if exists, located at left neighboring position A1, a second spatial MVP candidate is derived from motion information associated with an inter-predicted block, if exists, located at above neighboring position B1, a third spatial MVP candidate is derived from motion information associated with an inter-predicted block, if exists, located at above-right neighboring position B0, a forth spatial MVP candidate is derived from motion information associated with an inter-predicted block, if exists, located at left-bottom neighboring position A0 and a fifth spatial MVP candidate is derived from above motion associated with an inter-predicted blocks, if exists, located at left neighboring position B2. A redundancy check is then conducted between derived spatial MVPs, i.e. duplicate derived MVP candidates are discarded. The merge candidate list may further comprise a temporal MVP candidate, named TMVP candidate, that is derived from motion information associated with a co-located block, if exists, in the reference video picture at position H, or at center spatial position "C" otherwise. A redundancy check is then conducted between derived spatial MVPs, i.e. duplicate derived MVP candidates are discarded. Finally, when bi-directional temporal prediction type is used, if the merge candidate list comprises less than 5 MVP candidates, then a combined candidate is added to the merge candidate list. A combined candidate is derived from motion information associated to one reference video picture list and relative to one MVP candidate already present in the merge candidate list, with the motion information associated to another reference video picture list and relative to another MVP candidate already present in the merge candidate list. Finally, if the merge candidate list is still not full (5 merge candidates) then the merge candidate list is padded with zero motion vectors.

In ECM ("Algorithm description of Enhanced Compression Model 4 (ECM 4) ", M. Coban, F. Le Léannec, K. Naser, J. Ström, Joint Video Experts Team (JVET) of ITU-T SG 16 WP 3 and ISO/IEC JTC 1/SC 29, 23rd Meeting, by teleconference, 7-16 July 2021, Document JVET-Y202-v2, https://jvet-experts.org/doc_end_user/documents/25_Teleconference/wg11/JVET-Y2025-v2.zip), a Template Matching (TM) method may be used to determine some MVP candidates in AMVP and merge modes. The TM method is a decoder side motion vector refinement method. It refines a block's motion vector by matching a template region above and on the left of a current block with a template in a search area of the reference picture as illustrated on **Figure 8.** A better MV is searched around the initial MV of current block, for example within a [- 8, +8]-pel search range. The refined MV is obtained by minimizing a so-called template matching cost TMcost between a template around current block and candidate templates in reference video picture. The MVP candidate with minimum template matching cost is selected and further refined.

Coding the motion information according to VVC provides a richer representation of motion information than in HEVC.

In VVC, the motion representation may be provided according to either a AMVP mode or a merge mode.

In VVC, in the AMVP mode, the motion information used to define an inter-predicted block is represented as in the HEVC AMVP mode. The AMVP candidate list may comprise spatial and temporal MVP candidates as in HEVC, if exist. The AMVP candidate list may further comprise four additional HMVP (History-Based Motion Vector Prediction) candidates, if exist. Finally, if the AMVP candidate list comprises less than 2 MVP candidates then the AMVP candidate list is padded with zero motion vectors.

HMVP candidates are derived from previously coded MVPs associated with adjacent or non-adjacent blocks relative to the current block. To do so, a table of HMVP candidates is maintained at both encoder and decoder sides and updated on the fly, as a first-in-first-out (FIFO) buffer of MVPs. There are up to five HMVP candidates in the table. After coding one block, the table is updated by appending the associated motion information to the end of the table as a new HMVP candidate. The FIFO rule is applied to manage the table wherein, in addition to the basic FIFO mechanism, the redundant candidate in the HMVP table is firstly removed instead of the first one. The table is reset at each CTU row to enable parallel processing.

The AMVP mode employs AMVR (Adaptive Motion Vector Resolution). The AMVR tool allows signaling the MVds with quarter-pel, half-pel, integer-pel or 4-pel luma sample resolutions. This allows saving bits in the coding of MVd information also. In AMVR, the motion vector resolution is chosen at block level.

Finally, the internal motion vector representation is achieved at 1/16-luma sample accuracy, instead of ¼-luma sample accuracy in HEVC.

In VVC, in the merge mode, the motion information used to define an inter-predicted block is represented as in the HEVC merge mode.

The merge candidate list is different from the merge candidate list used in HEVC.

In VVC, the merge candidate list may be built for MMVD (Merge Mode with MV Difference) mode or CIIP (Combined Intra/Inter Prediction) mode.

MMVD mode allows coding a limited motion vector difference (MVd) on top of a selected merge candidate, to represent the motion information associated with an inter-predicted block. MMVD coding is limited to 4 vector directions and 8 magnitude values, from ¼ luma sample to 32-luma sample as illustrated on **Figure 9.** MMVD mode provides an intermediate accuracy level, hence an intermediate trade-off between rate cost and MV (Motion Vector) accuracy to signal the motion information. MMVD offsets may also be signaled into a bitstream. Motion vectors are then derived by adding MMVD offsets to MV predictors.

CIIP consists in combining an inter-prediction signal with an intra-prediction signal to predict a current block of a video picture. The inter-prediction signal in the CIIP mode is derived using the same inter-prediction process as applied to merge mode; and the intra-prediction signal is derived following a regular intra-prediction process with a planar mode. The planar prediction mode consists in predicting a block through a spatial interpolation process between reconstructed neighboring samples of the predicted block, located on the top and left of the block. Then, the intra and inter prediction signals are blended (combined) using weighted averaging, where the weight value is calculated depending on the coding modes of the top and left neighbouring blocks:

$$PCIIP = (Wmerge \times Pmerge + Wintra \times Pintra + 2) \gg 2$$

The sums of weights $W_{merge}$ and $W_{intra}$ is equal to 4 and these weights are constant in the whole current block.

In summary, in VVC, the merge candidate list may comprise spatial MVP candidates similar to HEVC except the two first candidates are swapped : candidate B1 is considered before candidate A1 during the merge candidate list construction. The merge candidate list may further comprise TMVP similarly to HEVC, HMVP candidates as in the VVC AMVP mode. Several HMVP candidates are inserted into the merge candidate list so that the merge candidate list reaches the maximum allowed number of MVP candidates (minus 1). The merge candidate list may also comprise up-to 1 pairwise average candidates computed as follows: the two first merge candidates present in the merge candidate list are considered and their motion vectors are averaged. This averaging is computed separately for each reference video picture list L0 and L1. So, if both MVP are bi-directional, motion vectors related to both lists L0 and L1 are averaged. If only one motion vector is present in a reference video picture list, it is taken as is to form the pairwise candidate. Finally, if the merge candidate list does not reach the maximum allowed number of MVP candidates, then the merge candidate list is padded with zero motion vectors.

Intra block copy (IBC) prediction mode is used in HEVC and VVC for screen content coding. It is well known that IBC prediction mode significantly improves the coding efficiency of screen content materials. Since prediction IBC mode is implemented as a block level coding mode, block matching (BM) is performed at the encoder to find an optimal block vector (or motion vector) for each block to be predicted. A block vector indicates the displacement from a block to be predicted of a video picture to a reference block, which is already reconstructed (decoded) inside said video picture. A block vector of an IBC predicted block of luma samples is in integer precision. A block vector of an IBC predicted block of chroma samples rounds to integer precision as well. When combined with AMVR, the IBC prediction mode can switch between 1-pel and 4-pel motion vector precisions. The IBC prediction mode is treated as the third prediction mode other than intra or inter prediction modes.

At CU level, IBC prediction mode is signalled with a flag that indicates either an IBC-AMVP mode or an IBC-skip/merge mode is used.

In the IBC-skip/merge mode, a block vector used to define an IBC predicted block is represented by one merge index of a merge candidate list. A merge index is used to indicate a block vector in the merge candidate list. The merge candidate list may comprise spatial, HMVP, and pairwise candidates. HMVP (History-based Motion Vector Prediction) candidates block vector predictors are obtained similarly to the case of classical inter merge coding. The HMVP involved a buffer of motion vector predictors which is fed as long as coding unit are being coded in IBC mode in a given picture. The HMVP buffer then consists in a buffer of block vectors and is used to provide candidate for predicting the block vector of a current coding unit to code or decode in IBC mode.

A new pairwise IBC merge candidate can be generated by averaging two IBC merge candidates. This means the block vector of the two first candidates in the merge list under construction are averaged to form the so-called pairwise block vector prediction candidate of the block to be predicted. This pairwise candidate is added to the IBC merge candidate list after the HMVP candidate.

For HMVP, block vectors are inserted into history buffer for future referencing.

In the IBC-AMVP mode, two block vector predictors are determined, one from left neighbor of the block to be predicted and one from above neighbor of the block to be predicted (if IBC predicted). When either neighbor is not available, a default block vector predictor is considered. A flag is signaled to indicate the block vector predictor index. Indeed, since at most 2 block vectors prediction candidates are considered in IBC AMVP mode, a flag is sufficient to identify the block vector prediction candidate used for the coding of the block vector information of the coding unit. Block vector difference is coded in the same way as a motion vector difference of inter coding units.

Additionally, in ECM, an IBC-TM merge mode is defined as being an IBC prediction mode combined with template matching. The IBC-TM merge mode involves an IBC-TM merge list different from the one used by IBC skip/merge mode. The candidates are selected according to a pruning method with a motion distance between the candidates as in the regular TM merge mode. The zero motion candidates have been replaced by (-W, 0), (0, -H), (-W, -H) MVs.

In the IBC-TM merge mode, the selected candidates are refined with the template matching method. A TM-merge flag is signalled to indicate if the template matching merge IBC mode is used.

In the IBC-TM AMVP mode, up to 3 candidates are selected from the IBC-TM merge list. The IBC-TM merge list is a list of block vector prediction candidates for the prediction of the block vector of a block to be predicted. It is constructed based on blocks surrounding a current block to be predicted, already coded and/or decoded in IBC coding mode. Each of those candidates are refined according to the usual template matching method and are sorted according to their resulting TM cost. The TM cost is computed as the distortion between a template region the top and left of a current block to be predicted, in its decoded and reconstructed state, and the corresponding top and left regions around a candidate prediction block pointed to by a candidate block vector.

When used for IBC prediction mode, TM refinement is performed at integer pel position, and in IBC-TM AMVP mode, it is performed either at integer or 4-pel precision depending on the AMVR value. The refinement is done within the existed IBC reference area.

IBC prediction mode cannot be used in combination with inter prediction tools of VVC such as CIIP and MMVD.

In VVC, unlike in the HEVC screen content coding extension, the current video picture is not included as one of the reference pictures in the reference picture list 0 for IBC prediction. The derivation process of block vectors for IBC mode excludes all neighboring blocks in inter mode and vice versa.

In VVC, IBC prediction mode shares the same process as in regular MV merge including with pairwise merge candidate and history-based motion predictor but disallows TMVP and zero vector because they are invalid for IBC prediction mode.

Separate HMVP buffer (5 candidates each) is used for conventional MV and IBC prediction mode.

On the other hand, we observed that in the current design of the IBC prediction tool, a number of aspects are making the IBC design much more adapted to graphical and screen video content rather than naturel video content.

This limits the compression performance improvement that can be obtained when using the IBC prediction mode on camera-captured video contents.

It is a target of the present invention to adapt the normative design of the IBC coding mode, so that it keeps at least its coding performance on screen content, but also its performances are significantly improved when compressing natural videos.

The problem solved by the present invention is to adapt the IBC prediction mode as defined in VVC, so that it brings compression efficiency improvement when activating IBC prediction mode on camera-captured video content, while keeping at least the current performance of IBC prediction mode on screen content and graphical content.

An existing solution for the problem to solve is to include the current video picture being encoded or decoded into the buffer of reference pictures (the so-called Decoded Picture Buffer, DPB), used for the temporal prediction of the current video picture blocks.

Then, the performances for coding natural sequences with IBC prediction mode is likely to improve, compared to VVC.

However, it is likely that the performance of IBC prediction mode gets degraded on screen and graphical contents since the motion representation and compensation more adapted to natural content and less adapted to screen content.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of predicting a block of a video picture, wherein the method comprises: signaling an intra-block-copy mode type, the intra-block-copy mode type indicating whether an intra-block-copy prediction mode is configured to predict camera-captured video content or not, said intra-block-copy prediction mode determining at least one block vector for predicting the block of the video picture from at least one reference block of the video picture; when the intra-block-copy mode type indicates that the intra-block-copy prediction mode is configured to predict camera-captured video content, configuring the intra-block-copy prediction mode to predict the block of the video picture; and deriving a predicted block of the block of the video picture based on the configured intra-block-copy mode prediction mode.

In one exemplary embodiment, the block belonging to a slice of the video picture, the intra-block-copy mode type into is signalled at the slice level.

In one exemplary embodiment, configuring the intra-block-copy prediction mode to predict camera-captured video content further comprises: signalling a syntax element (**ibc_pred_idc_flag**) indicating if bi-prediction is allowed, and if said syntax element indicates that bi-prediction is allowed; and signalling two block vectors, the predicted of the block of the video picture being an average of the two block vectors.

In one exemplary embodiment, configuring the intra-block-copy prediction mode to predict camera-captured video content further comprises signalling a syntax element (**mvp_l1_flag**) to identify a block vector predictor of each block vector in a list of block vectors associated with neighboring already decoded blocks of the block of the video picture, said neighboring blocks belonging to the video picture.

In one exemplary embodiment, the at least one block vector is represented at a sub-pel accuracy level.

In one exemplary embodiment, configuring the intra-block-copy prediction mode to predict camera-captured video content further comprises signaling at least one block vector difference calculated between a block vector and a reference block inside the video picture, and wherein each block vector difference is signalled using sub-pel accuracy level.

In one exemplary embodiment, configuring the intra-block-copy prediction mode to predict camera-captured video content further comprises encoding each block vector difference, said encoding being limited to some vector directions and magnitudes.

In one exemplary embodiment, configuring the intra-block-copy prediction mode to predict camera-captured video content further comprises signalling (step 310) a syntax element (**mmvd_merge_flag**) to indicate if the block vector difference encoding is limited to some vector directions and magnitudes.

In one exemplary embodiment, configuring the intra-block-copy prediction mode to predict camera-captured video content further comprises signalling a syntax element (**intra_tmp_flag**) to indicate if an intra-block-copy prediction based on template matching is used to derive the predicted block of the block of the video picture or if the predicted block of the block of the video picture is derived according to the first aspect.

In one exemplary embodiment, deriving a predicted block of the block of the video picture based on the configured intra-block-copy mode prediction mode comprises: deriving a first predicted block of the block of the video picture from the configured intra-block-copy prediction mode; deriving a second predicted block of the block of the video picture; and deriving the predicted block of the block of the video picture by blending the first and second predicted blocks.

In one exemplary embodiment, the second predicted block is derived from a motion compensated prediction or an intra prediction of the block of the video picture.

According to a second aspect of the present application, there is provided a method of encoding a block of a video picture based on a predicted block derived from a method according to the fist aspect.

According to a third aspect of the present application, there is provided a method of decoding a block of a video picture based on a predicted block derived from a method according to the first aspect.

According to a fourth aspect of the present application, there is provided a bitstream, formatted to include encoded video picture data obtained from a method according to the first aspect.

According to a fifth aspect of the present application, there is provided an apparatus comprising means for performing one of the method according to the first, second and/or third aspect.

According to a sixth aspect of the present application, there is provided a computer program product including instructions which, when the program is executed by one or more processors, causes the one or more processors to carry out a method according to the first, second and/or third aspect.

According to a seventh aspect of the present application, there is provided a non-transitory storage medium carrying instructions of program code for executing a method according to the first, second and/or third aspect.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with VVC;

**Figure 4** shows examples of split modes supported in the multi-type tree partitioning in accordance with VVC;

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** shows an illustrative example for building a AMVP candidate list used to define an inter-predicted block of a current block of a current video picture;

**Figure 8** shows an example of template matching method in accordance with prior art;

**Figure 9** shows an example of limited motion vector differences in accordance with prior art;

**Figure 10** shows schematically a block diagram of a method 300 of predicting of a block of a video picture in accordance with exemplary embodiments;

**Figure 11** shows an example of a method 400 of predicting a block of a video picture in accordance with the fifth exemplary embodiments of step 302 and its variants; and

**Figure 12** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspects relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to the current version of VVC. The at least one exemplary embodiment may apply to pre-existing or future-developed, and extensions of VVC and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

Generally speaking, the present application relates to a method of predicting a block of a video picture comprising signaling an intra-block-copy mode type indicating whether an intra-block-copy prediction mode is configured to predict camera-captured video content or not, said intra-block-copy prediction mode determining a block vector for predicting the block of the video picture from a reference block of the video picture; when the intra-block-copy mode type indicates that the intra-block-copy prediction mode is configured to predict camera-captured video content, configuring the intra-block-copy prediction mode to predict the block of the video picture; and deriving a predicted block of the block of the video picture based on the configured intra-block-copy mode prediction mode.

The present invention makes the intra-block-copy (IBC) prediction mode more adapted to the prediction of camera-captured video content than the IBC prediction mode as specified in VVC and ECM. The present invention enables the video coding/decoding switching between different configurations of the IBC prediction mode, one to predict screen/graphical content and others to predict camera-captured video content. A predictive coding of the block of the video picture based on the a predicted block derived from the present invention involves coding efficiency of said block of the video picture compared to the coding efficiency of that block according to the IBC prediction mode as specified n VVC and ECM.

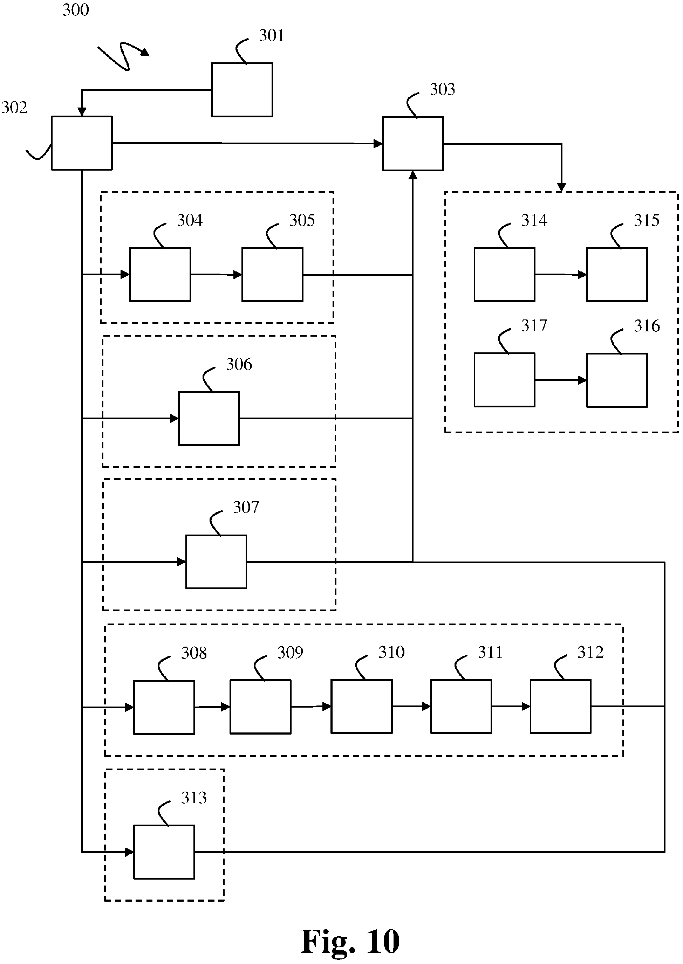

Other aspects and advantages of the present application will be described below in particular exemplary embodiments, with reference to the figures. **Figure 10** shows schematically a block diagram of a method 300 of predicting of a block of a video picture in accordance with exemplary embodiments.

Method 300 provides a predicted block of the block of the video picture. This predicted block may be used in the selection of a prediction mode of method 100 or used as a prediction mode of the prediction process of method 200.

Prediction information relative to method 300 is signaled, i.e. said prediction information is written into a bitstream when method 300 is used in method 100 and is parsed from a bitstream when method 300 is used in method 200.

In step 301, an intra-block-copy mode type, in short IBC mode type, is signalled as prediction information. The IBC mode type indicates whether an IBC prediction mode is configured to camera-captured video content or not. The IBC prediction mode determines at least one block vector for predicting the block of the video picture from at least one (reconstructed) reference block of the video picture

In one exemplary embodiment of step 301, the IBC mode type is signaled at a slice level.

In a variant, the IBC mode type is signaled only in case IBC prediction mode is activated.

Table 1 shows an example of signaling the IBC prediction mode type as a flag **sh_ibc_camera_content_flag** in a slice header syntax as defined by VVC in accordance with an exemplary embodiment.

Table 1

| slice_header( ) { | Descriptor |
|---|---|
| [ .... ] | |
| if( sps_ibc_enabled_flag ) | |
| **sh_ibc_camera_content_flag** | u(1) |
| [...] | |

If the flag **sh_ibc_camera_content_flag** is equal to false (=0), then blocks of the video picture using the IBC prediction mode in the corresponding slice employ the IBC mode for screen content coding as defined in VVC and ECM.

If the flag **sh_ibc_camera_content_flag** is equal to true (=1), then the blocks of the video picture using the IBC prediction mode in the corresponding slice employ the predicted blocks derived from steps 302 of method 300 for camera-captured video content. As detailed earlier, step 302 adapts (configures) the IBC prediction mode as defined in VVC to improve the prediction of camera-captured video content and thus predictive coding efficiency of camera-captured video content.

When the IBC mode type indicates that the IBC prediction mode is configured to predict camera-captured video content, in step 302 the IBC prediction mode is configured to predict camera-captured video content and in step 303, a predicted block is derived by predicting the block of the video picture according to the configured IBC prediction mode.

In one first exemplary embodiment of step 302, configuring (step 302) the intra-block-copy prediction mode to predict camera-captured video content further comprises signalling (step 304) as prediction information a syntax element **ibc_pred_idc_flag** to indicate if bi-prediction is allowed.

In a variant of the first exemplary embodiment of step 302, if the syntax element **ibc_pred_idc_flag** indicates bi-prediction is allowed, then configuring (302) the intra-block-copy prediction mode to predict camera-captured video content further comprises signalling (305) as prediction information two block vectors, and the predicted block of the block of the video picture may then be an average of the two block vectors (step 303).

In one second exemplary embodiment of step 302, configuring (302) the intra-block-copy prediction mode to predict camera-captured video content further comprises signalling (306) as prediction information a syntax element **mvp_l1_flag** to identify a block vector predictor of each block vector of the IBC prediction mode in a list of block vectors associated with neighboring (already decoded) blocks of the block of the video picture, said neighboring (already decoded) blocks belonging to the video picture.

Table 2 shows a syntax according to VVC relative to a block of a video picture and amended according to the first and second exemplary embodiments of step 302 and their variants.

Table 2

| coding_unit( x0, y0, cbWidth, cbHeight, cqtDepth, treeType , modeType ) { | **Descriptor** |
|---|---|
| [ .... ] | |
| if(pred_mode_ibc_flag==1 && sh_ibc_camera_content_flag == 1 ){ // natural content dedicated IBC mode | |
| **ibc_pred_idc_flag**[ x0 ][ y0 ] | ae(v) |
| if( ibc_pred_idc_flag[ x0 ][ y0 ] ) { | |
| **mvp_l1_flag**[ x0 ] [ y0 ] | ae(v) |
| } | |
| } | |
| [ ... ] | |

In one third exemplary embodiment of step 302, at least one block vector determined by the IBC prediction mode may be represented using a sub-pel resolution level as similar to AMVR in the inter predictions modes of VVC/ECM. Therefore, spatial interpolation filters may apply on said at least one block vector as similar to spatial interpolation filters of inter-prediction modes of VVC applied on motion vector compensation.

In a variant of the third exemplary embodiment of step 302, configuring (302) the intra-block-copy prediction mode to predict camera-captured video content further comprises signalling (step 307) as prediction information a sub-pel resolution level.

In one fourth exemplary embodiment of step 302, configuring (302) the intra-block-copy prediction mode to predict camera-captured video content further comprises signalling (step 308) as prediction information at least one block vector difference calculated between a block vector determined by the IBC prediction mode and a reference block inside the video picture.

In a variant of the fourth exemplary embodiment of step 302, each block vector difference is signalled using sub-pel accuracy level and spatial interpolation filters may applied as similar to spatial interpolation filters of inter-prediction modes of VVC applied on motion vector compensation.

In a variant of the fourth exemplary embodiment of step 302, configuring (302) the intra-block-copy prediction mode to predict camera-captured video content further comprises encoding (step 309) a block vector difference, said encoding is limited to some vector directions and magnitudes.

For example, the block vector difference is limited to 4 vector directions and 8 magnitude values, from ¼ luma sample to 32-luma sample as a motion vector difference encoded according to MMVD. Block vector offsets may apply on block vector predictors to reconstruct block vectors of the IBC prediction mode as similar to MMVD apply on motion vector predictors to reconstruct motion vectors as defined in VVC.

In a variant of the fourth exemplary embodiment of step 302, when merge mode is activated, configuring (302) the intra-block-copy prediction mode to predict camera-captured video content further comprises signalling (step 310) as prediction information a syntax element **mmvd_merge_flag** to indicate if the block vector difference encoding is limited to some vector directions and magnitudes.

In a variant of the fourth exemplary embodiment of step 302, configuring (302) the intra-block-copy prediction mode to predict camera-captured video content further comprises signalling (step 311) a syntax element **mmvd_cand_flag** to indicate a merge candidate block vector index in a mmvd merge candidate list used to derive a block vector of the video picture block to be predicted. The mmvd merge candidate list is basically a subset of the regular merge candidate list, and is made of only two elements. Basically, the two first merge candidate of the reguar merge candidate list are used to form the mmvd merge candidate list. As a matter of fact, a single flag mmvd_cand_flag is needed to indicate which id the two mmvd merge candidates is used to derive the current block's motion information.

In a variant of the fourth exemplary embodiment of step 302, configuring (302) the intra-block-copy prediction mode to predict camera-captured video content comprises signalling (step 312) two syntax elements **mmvd_distance_idx** and **mmvd_direction_idx** to indicate a block vector offset associated with a block vector difference.

Table 3 is an example of a VVC syntax relative to merge data and amended according to the fourth exemplary embodiments of step 302 and its variants.

Table 3

| merge_data( x0, y0, cbWidth, cbHeight, chType ) { | **Descriptor** |
|---|---|
|     if( CuPredMode[ chType ][ x0 ][ y0 ] = = MODE_IBC ) { | |
|       if( sh_ibc_camera_content_flag == 1 ){ // natural content dedicated IBC mode | |
|         if( sps_mmvd_enabled_flag ) | |
|           **mmvd_merge_flag**[ x0 ][ y0 ] | ae(v) |
|         if( mmvd_merge_flag[ x0 ][ y0 ] = = 1 ) { | |
|           if( MaxNumMergeCand > 1 ) | |
|             **mmvd_cand_flag**[ x0 ][ y0 ] | ae(v) |
|           **mmvd_distance_idx**[ x0 ][ y0 ] | ae(v) |
|           **mmvd_direction_idx**[ x0 ][ y0 ] | ae(v) |
|         } else if( MaxNumMergeCand > 1 ) | |
|           **merge_idx**[ x0 ][ y0 ] | ae(v) |
|       } else if( MaxNumMergeCand > 1 ) // screen content dedicated IBC mode | |
|         **merge_idx**[ x0 ][ y0 ] | ae(v) |
|     } [ .... ] | |

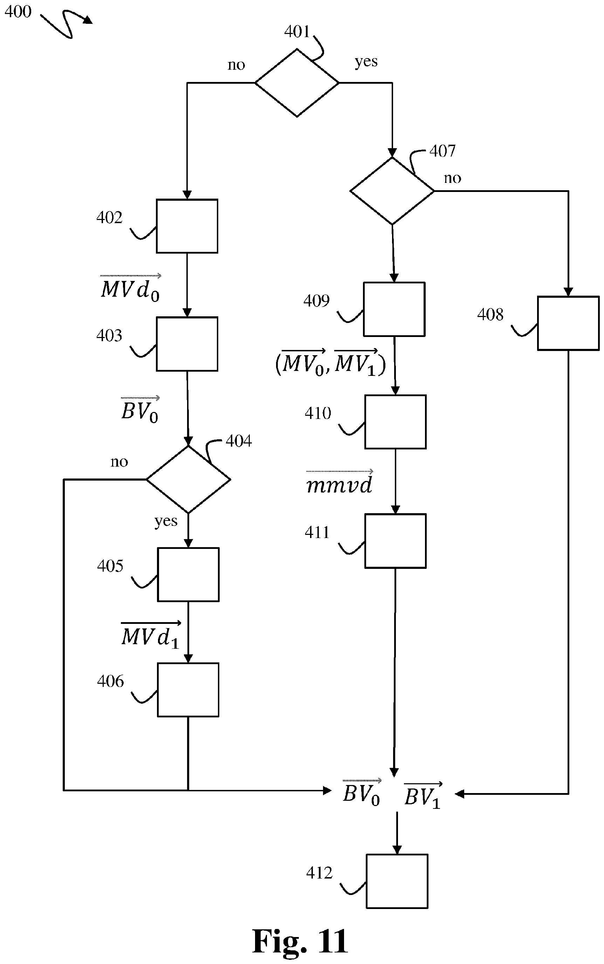

**Figure 11** shows an example of a method 400 of predicting a block of a video picture in accordance with the first, second and fourth exemplary embodiments of step 302 and its variants as discussed before.

Prediction information is obtained according to the exemplary embodiments of step 302. Said prediction information may be determined at the encoding method 100 and parsed from a bitstream at the decoding method 200.

According to exemplary embodiments and variants of step 302, prediction information may comprise the syntax elements **ibc_pred_idc_flag, mvp_l1_flag, mmvd_merge_flag, mmvd_cand_flag, mmvd_distance_idx mmvd_direction_idx,** at least block vector difference, and/or a sub-pel resolution level.

In step 401, the method checks whether merge mode is activated.

If not, one or two block vectors $\overrightarrow{BV_0}$ and $\overrightarrow{BV_1}$ is/are reconstructed in steps 402-406.

In step 402, a first block vector difference $MVd_0^{parsed}$ (prediction information) is converted from the sub-pel resolution level (prediction information) to an internal precision used for block vector representation. This leads to a first block vector difference $\overrightarrow{MVd_0}$.

In step 403, a first block vector $\overrightarrow{BV_0}$ is reconstructed by adding the first block vector difference $\overrightarrow{MVd_0}$ and a first block vector predictor $\overrightarrow{MVP_0}$ obtained from the syntax element **mvp_l1_flag.**

$$\overrightarrow{BV_0} = \overrightarrow{MVP_0} + \overrightarrow{MVd_0}$$

In step 404, the method 400 checks whether the syntax element **ibc_pred_idc_flag** allows bi-prediction.

If not, step 404 is followed by step 412.

If yes, step 404 is followed by step 405 and 406.

In step 405, a second block vector difference $MVd_1^{parsed}$ (prediction information) is converted from the sub-pel resolution level to an internal precision used for block vector represention. This leads to a second block vector difference $\overrightarrow{MVd_1}$.

In step 406, a second block vector $\overrightarrow{BV_1}$ is reconstructed by adding the second block vector difference $\overrightarrow{MVd_1}$ and the second block vector predictor $\overrightarrow{MVP_1}$:

$$\overrightarrow{BV_1} = \overrightarrow{MVP_1} + \overrightarrow{MVd_1}$$

Step 406 is followed by step 412.

If the merge mode is activated (step 401), one or two block vectors $\overrightarrow{BV_0}$ and $\overrightarrow{BV_1}$ is/are reconstructed in step 407-411.

In step 407, the method 400 checks if the syntax element **mmvd_merge_flag** indicates that block vector differences encoding (decoding) is limited to some vector directions and magnitudes.

If not, in step 408, two block vectors $\overrightarrow{BV_0}$ and $\overrightarrow{BV_1}$ are derived according to a merge mode in which two block vector merge candidates are indicated by a syntax element **merge_idx.**

If yes, one or two blocks $\overrightarrow{BV_0}$ and $\overrightarrow{BV_1}$ is/are reconstructed in steps 409-411.

In step 409, a merge candidate block vector, identified by syntax element **mmvd_cand_flag** is obtained from a mmvd merge candidate list.

If the merge candidate block vector uses a single block vector $\overrightarrow{BV_0}$ then a single block vector predictor $\overrightarrow{MV_0}$ is derived in steps 410 and 411. In step 410, a single block vector offset $\overrightarrow{mmvd}$ is derived from the syntax elements **mmvd_distance_idx** and **mmvd_direction_idx**. In step 411, the bloc vector $\overrightarrow{BV_0}$ is derived by adding the block vector offset $\overrightarrow{mmvd}$ to the block vector predictor $\overrightarrow{MV_0}$:

$$\overrightarrow{BV_0} = \overrightarrow{MV_0} + \overrightarrow{mmvd}$$

If the merge candidate block vector uses two block vectors $\overrightarrow{BV_0}$ and $\overrightarrow{BV_1}$ then two block vector predictors $\overrightarrow{MV_0}$, $\overrightarrow{MV_0}$ are derived in steps 410 and 411. In step 410, a single block vector offset $\overrightarrow{mmvd}$ is derived from the syntax elements **mmvd_distance_idx** and **mmvd_direction_idx.** In step 411, the bloc vector $\overrightarrow{BV_0}$ is derived by adding the block vector offset $\overrightarrow{mmvd}$ to the block vector predictor $\overrightarrow{MV_0}$ and the bloc vector $\overrightarrow{BV_1}$ is derived by adding the block vector offset $\overrightarrow{mmvd}$

to the the block vector predictor $\overrightarrow{MV_1}$:

$$\begin{cases} \overrightarrow{BV_0} = \overrightarrow{MV_0} + \overrightarrow{mmvd} \\ \overrightarrow{BV_1} = \overrightarrow{MV_1} + \overrightarrow{mmvd} \end{cases}$$

Step 411 is followed by step 412.

In step 411, the method 400 derives a a predicted block of the block of the video picture from the single reconstructed block vector $\overrightarrow{BV_0}$ or from a blending of the two reconstructed block vectors $\overrightarrow{BV_0}, \overrightarrow{BV_1}$.

In a variant, the mirror value of the block vector offset $\overrightarrow{mmvd}$ may be added to the block vector predictor $\overrightarrow{MV_1}$: $\overrightarrow{BV_1} = \overrightarrow{MV_1} - \overrightarrow{mmvd}$.

In a variant, a second block vector difference may be parsed from the bitstream and added to the block vector predictor candidate $\overrightarrow{MV_1}$.

In a variant, no block vector offset $\overrightarrow{mmvd}$ is used to reconstruct the bloc vector $\overrightarrow{BV_1}$.

In a variant, each block vector difference is encoded/decoded according to the syntax element **mmvd_merge_flag.** Said encoding is limited to some vector directions and magnitude.

In one fifth exemplary embodiment of step 302, configuring (302) the intra-block-copy prediction mode to predict camera-captured video content further comprises signalling (step 313) a syntax element **intra_tmp_flag** to indicate if an Intra-Block-Copy Prediction based on Template Matching (IBCTMP) is used to derive a predicted block of the block of the video picture or not. Basically, IBCTMP is similar to IBC prediction mode, except the reference area to predict a video picture block is search based on template matching (TM) rather than being signalled through a block vector as in IBC prediction mode.

If syntax element **intra_tmp_flag** equals 1, then IBCTMP is used to derive a predicted block of the video picture. Thus, no block vector related information is coded in the bitstream. It is rather searched, synchronously both on the encoder and the decoder sides.

This search is based on template matching as is done for the screen content dedicated template matching process. In addition, since IBCTMP is used for camera-captured content, the template matching not only searches integer position for a reference block, but also fractional spatial position between luma samples, as is done for template matching in inter prediction.

If syntax element **intra_tmp_flag** equals 0, then IBC prediction mode configured according to one of the embodiments of step 302 and their variants as discussed above is used to a predicted block of the video picture.

Table 4 shows a syntax structure based on the syntax structure of table 2 and amended according to the second and sixth exemplary embodiments and its variants.

Table 4

| coding_unit( x0, y0, cbWidth, cbHeight, cqtDepth, treeTyp e,modeType ) { | | Descriptor |
|---|---|---|
| [ .... ] | | |
| if( | pred_mode_ibc_flag==1 && sh_ibc_screen_ content_flag == 0) { | |
| | **intra_tmp_flag** | ae(v) |
| } | | |
| [...] | | |
| if( pred_mode_ibc_flag==1 && sh_ibc_screen_content_flag == 0 && intra_tmp_flag==0) { // natural content dedicated IBC mode | | |
| | **ibc_pred_idc_flag**[ x0 ][ y0 ] | ae(v) |
| | if( ibc_pred_idc_flag[ x0 ][ y0 ] ) { | |
| | **mvp_l1_flag**[ x0 ][ y0 ] | ae(v) |
| | } | |
| } | | |
| [ ... ] | | |

(continued)

| |
|---|
| } |

In one exemplary embodiment of step 303, the method 300 further comprises deriving (step 314) an IBC predicted block of the block of the video picture from the configured IBC prediction mode, deriving (315) another predicted block of the block of the video picture; and deriving (316) the predicted block of the block of the video picture by blending the first and second predicted blocks.

In a variant of said exemplary embodiment of step 303, said another predicted block is derived from a motion compensated prediction of the block of the video picture.

The advantage of this exemplary embodiment is that it provides a means of performing bi-prediction of a video picture block, based on a reference block of a reference picture of current video picture and an already reconstructed block area of the current video picture. Such prediction mode brings further coding efficiency improvement on top of the prior art.

In a variant of said exemplary embodiment of step 303, said another predicted block is derived from an intra prediction of the block of the video picture.

For example, the intra prediction may be DC, Planar, Direct Mode, horizontal and vertical angular predictions of VVC, DIMD (decoder side intra mode derivation) or TIMD (template based intra mode derivation) of the ECM. These coding modes are described in the ECM documentation ("Algorithm description of Enhanced Compression Model 4 (ECM 4) ", M. Coban, F. Le Léannec, K. Naser, J. Ström, Joint Video Experts Team (JVET) of ITU-T SG 16 WP 3 and ISO/IEC JTC 1/SC 29, 23rd Meeting, by teleconference, 7-16 July 2021, Document JVET-Y202-v2, https://jvet-experts.org/doc_end_user/documents/25_Teleconference/wg11/JVET-Y2025-v2.zip).

DC is an intra prediction mode that uses the mean sample value of the reference samples to the left and above the block for prediction generation.

Planar mode is a weighted average of 4 reference sample values (picked up as orthogonal projections of the sample to predict in the top and left reconstructed areas).

Direct Mode (DM) is a chroma intra prediction mode corresponding to the intra prediction mode of co-located reconstructed luma samples.

Horizontal and vertical modes use respectively copy of left and above reconstructed samples without interpolation to predict samples rows and columns, respectively.

In a variant of said exemplary embodiment of step 303, the blending may be similar to the CIIP mode.

Said exemplary embodiment of step 303 improves coding efficiency compared to CIIP mode in VVC because the intra-predictor is an IBC predictor optimized for predicting camera-captured video contents.

In one variant of said exemplary embodiment of step 303, the method 300 further comprises signalling (317) a syntax element **regular_merge_flag** into the bitstream. The syntax element **regular_merge_flag** equal 1 to indicate that the predicted block of the block of the video picture is derived from one of the exemplary embodiments or variants of step 302. The syntax element **regular_merge_flag** equal to 0 to indicate that the IBC predicted block is combined with said another predicted block of the video picture.

In a variant of said exemplary embodiment of step 303, the syntax element **regular_merge_flag** is added in table 5 which is an example of a VVC syntax relative to merge data and amended according to the sixth exemplary embodiment of step 302.

Table 5 shows the syntax structure according to table 3 and amended according to the said exemplary embodiment of step 303 and its variants.

Table 5

| merge_data( x0, y0, cbWidth, cbHeight, chType ) { | Descriptor |
|---|---|
|     if( CuPredMode[ chType ][ x0 ][ y0 ] = = MODE_IBC ) { | |
| if( sh_ibc_camera_content_flag == 1){ // natural content dedicated IBC mode | |
|       **regular_merge_flag**[ x0 ][ y0 ] | |
|     if( regular_merge_flag[ x0 ][ y0 ] = = 1 ) { | |
|       if( sps_mmvd_enabled_flag ) | |
|         **mmvd_merge_flag**[ x0 ][ y0 ] | ae(v) |
|     if( mmvd_merge_flag[ x0 ][ y0 ] = = 1 ) { | |

(continued)

| | |
|---|---|
| if( MaxNumMergeCand > 1 ) | |
| mmvd_cand_flag[ x0 ][ y0 ] | ae(v) |
| mmvd_distance_idx[ x0 ][ y0 ] | ae(v) |
| mmvd_direction_idx[ x0 ][ y0 ] | ae(v) |
| } else if( MaxNumMergeCand > 1 ) | |
| merge_idx[ x0 ][ y0 ] | ae(v) |
| } // ciip mode is used if regular merge flag is equal to 0 | |
| } else { | |
| if(sps_ciip_enabled_flag && sps_gpm_enabled_flag && sh_slice_type= =B && cu_skip_flag[ x0 ][ y0 ] = = 0 && cbWidth >= 8 && cbHeight>=8 && cbWidth < ( 8 * cbHeight ) && cbHeight<( 8 * cbWidth ) && cbWidth < 128 && cbHeight < 128 ) | |
| if( MaxNumMergeCand > 1 ) | |
| merge_idx[ x0 ][ y0 ] // ciip is on, merge index associated to ciip | ae(v) |
| } else if( MaxNumMergeCand > 1 ) // screen content dedicated IBC mode | |
| | |
| merge_idx[ x0 ][ y0 ] | ae(v) |
| } [ .... ] | |

In a variant of step 303, when the IBC predicted block is determined, a block vector associated with the block of the video picture is set as being the first merge candidate of the merge candidate list (similar to IBC skip/merge mode).

In one other variant of step 303, a merge index may be signalled, and the block vector may be derived according to that signalled merge index (similar to IBC skip/merge mode).

In another variant of step 303, if the syntax element **ibc_pred_idc_flag** indicates bi-prediction is allowed, two block vectors may be signalled to identify a given block of a video picture block to be predicted, and the IBC predicted block may then be an average of the two block vectors.

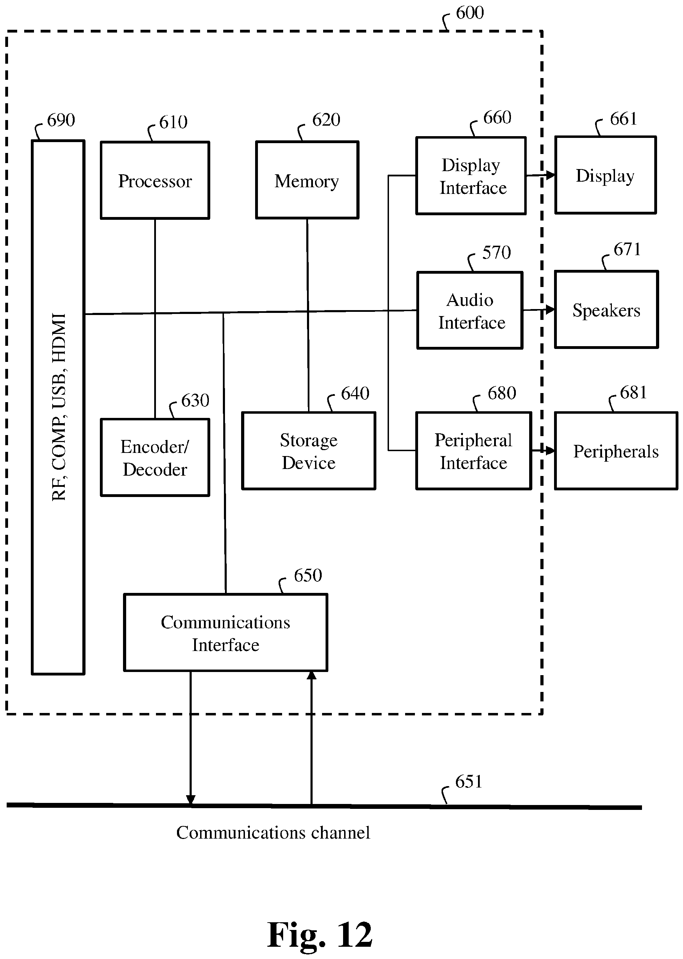

**Figure 12** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-12**, various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of predicting a block of a video picture, wherein the method comprises:

   - signaling (301) an intra-block-copy mode type, the intra-block-copy mode type indicating whether an intra-block-copy prediction mode is configured to predict camera-captured video content or not, said intra-block-copy prediction mode determining at least one block vector for predicting the block of the video picture from at least one reference block of the video picture;
   - when the intra-block-copy mode type indicates that the intra-block-copy prediction mode is configured to predict camera-captured video content,
   - configuring (302) the intra-block-copy prediction mode to predict the block of the video picture; and
   - deriving (303) a predicted block of the block of the video picture based on the configured intra-block-copy mode prediction mode.

2. The method of claim 1, wherein the block belonging to a slice of the video picture, the intra-block-copy mode type into is signalled (301) at the slice level.

3. The method of claim 1 or 2, configuring (302) the intra-block-copy prediction mode to predict camera-captured video content further comprises:

   - signalling (304) a syntax element (**ibc_pred_idc_flag**) indicating if bi-prediction is allowed, and if said syntax element indicates that bi-prediction is allowed; and
   - signalling (305) two block vectors, the predicted of the block of the video picture being an average of the two block vectors.

4. The method of claim 1 to 3, wherein configuring (302) the intra-block-copy prediction mode to predict camera-captured video content further comprises signalling (306) a syntax element (**mvp_l1_flag**) to identify a block vector predictor of each block vector in a list of block vectors associated with neighboring already decoded blocks of the block of the video picture, said neighboring blocks belonging to the video picture.

5. The method of one of claims 1 to 4, wherein the at least one block vector is represented at a sub-pel accuracy level.

6. The method of one of claims 1 to 5 wherein configuring (302) the intra-block-copy prediction mode to predict camera-captured video content further comprises signaling (308) at least one block vector difference calculated between a block vector and a reference block inside the video picture, and wherein each block vector difference is signalled using sub-pel accuracy level

7. The method of claim 6, wherein configuring (302) the intra-block-copy prediction mode to predict camera-captured video content further comprises encoding (309) each block vector difference, said encoding being limited to some vector directions and magnitudes.

8. The method of claim 7, wherein configuring (302) the intra-block-copy prediction mode to predict camera-captured video content further comprises signalling (step 310) a syntax element (**mmvd_merge_flag**) to indicate if the block vector difference encoding is limited to some vector directions and magnitudes.

9. The method of claim 1 or 2, wherein configuring (302) the intra-block-copy prediction mode to predict camera-captured video content further comprises signalling (313) a syntax element (**intra_tmp_flag**) to indicate if an intra-block-copy prediction based on template matching is used to derive the predicted block of the block of the video picture or if the predicted block of the block of the video picture is derived according to one of the claims 1 to 11.

10. The method of claim 1 or 2, wherein deriving (303) a predicted block of the block of the video picture based on the configured intra-block-copy mode prediction mode comprises:

   - deriving (314) a first predicted block of the block of the video picture from the configured intra-block-copy prediction mode;
   - deriving (315) a second predicted block of the block of the video picture; and
   - deriving (316) the predicted block of the block of the video picture by blending the first and second predicted blocks.

11. The method of claim 10, wherein the second predicted block is derived from a motion compensated prediction or an intra prediction of the block of the video picture.

12. A method for encoding a block of a video picture based on a predicted block derived from a method of one of claims 1 to 11.

13. A method for decoding a block of a video picture based on a predicted block derived from a method of one of claims 1 to 11.

14. A bitstream, formatted to include encoded video picture data obtained from a method of one of claims 1 to 11.

15. An apparatus comprising means for performing one of the method claimed in any one of claims 1 to 13.

16. A computer program product including instructions which, when the program is executed by one or more processors, causes the one or more processors to carry out a method claimed in any one of claims 1 to 13.

17. A non-transitory storage medium carrying instructions of program code for executing a method claimed in any one of claims 1 to 13.

**Fig. 1**

NxN   2Nx2N   Nx2N   2NxN

nLx2N   nLx2N   2NxnU   2NxnD

**Fig. 2**

## Fig. 3

SBTV  SBTH  STTV  STTH

## Fig. 4

**Fig. 5**

200

**Fig. 6**

# Fig. 7

Reference frame          Current frame

# Fig. 8

L0 reference                    L1 reference

# Fig. 9

**Fig. 10**

400

401

no    yes

402

$$\overrightarrow{MVd_0}$$

403

$$\overrightarrow{BV_0}$$

404

no

yes

405

$$\overrightarrow{MVd_1}$$

406

407

no

409

$$(\overrightarrow{MV_0}, \overrightarrow{MV_1})$$

408

410

$$\overrightarrow{mmvd}$$

411

$$\overrightarrow{BV_0} \quad \overrightarrow{BV_1}$$

412

**Fig. 11**

**Fig. 12**

Europäisches
Patentamt

European
Patent Office

Office européen
des brevets

# EUROPEAN SEARCH REPORT

Application Number

EP 22 30 6003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/336735 A1 (CHANG YAO-JEN [US] ET AL) 22 October 2020 (2020-10-22) * paragraphs [0230] - [0242], [0287] - [0318]; tables 9-9 * ----- | 1-17 | INV. H04N19/11 H04N19/136 H04N19/174 H04N19/176 H04N19/593 H04N19/70 |
| A | CHEN HAOMING ET AL: "Improvements on Intra Block Copy in natural content video coding", 2015 IEEE INTERNATIONAL SYMPOSIUM ON CIRCUITS AND SYSTEMS (ISCAS), IEEE, 24 May 2015 (2015-05-24), pages 2772-2775, XP033183745, DOI: 10.1109/ISCAS.2015.7169261 [retrieved on 2015-07-27] * abstract; sections II, III * ----- | 1-17 | |
| A | XU (BYTEDANCE) J: "EE2-3.2-related: IBC Adaptation for Camera-Captured Contents", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0157 ; m59491 28 April 2022 (2022-04-28), XP030301079, Retrieved from the Internet: URL:https://jvet-experts.org/doc_end_user/documents/26_Teleconference/wg11/JVET-Z0157-v4.zip JVET-Z0157-v4-clean.docx [retrieved on 2022-04-28] * sections 1, 2 * ----- -/-- | 1-17 | TECHNICAL FIELDS SEARCHED (IPC) H04N |

The present search report has been drawn up for all claims

| Place of search | Date of completion of the search | Examiner |
|---|---|---|
| Munich | 5 December 2022 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

## EUROPEAN SEARCH REPORT

**Application Number**

EP 22 30 6003

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEE YUJIN ET AL: "Study of sub-pel block vector for intra block copy", SPIE SMART STRUCTURES AND MATERIALS + NONDESTRUCTIVE EVALUATION AND HEALTH MONITORING, 2005, SAN DIEGO, CALIFORNIA, UNITED STATES, SPIE, US, vol. 12177, 30 April 2022 (2022-04-30), pages 121771B-121771B, XP060156924, ISSN: 0277-786X, DOI: 10.1117/12.2631960 ISBN: 978-1-5106-4548-6 * abstract; sections 1, 5 * ----- | 1-17 | |
| A | ZHANG (BYTEDANCE) N ET AL: "EE2-related: IBC Merge Mode with Block Vector Differences", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0152 ; m59486 14 April 2022 (2022-04-14), XP030301062, Retrieved from the Internet: URL:https://jvet-experts.org/doc_end_user/documents/26_Teleconference/wg11/JVET-Z0152-v1.zip JVET-Z0152.docx [retrieved on 2022-04-14] * sections 1, 2 * ----- | 1-17 | TECHNICAL FIELDS SEARCHED (IPC) |

The present search report has been drawn up for all claims

| Place of search | Date of completion of the search | Examiner |
|---|---|---|
| Munich | 5 December 2022 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6003

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2022

| Patent document cited in search report | | Publication date | Patent family member(s) | | Publication date |
|---|---|---|---|---|---|
| US 2020336735 | A1 | 22-10-2020 | CN 113748679 | A | 03-12-2021 |
| | | | EP 3957065 | A1 | 23-02-2022 |
| | | | TW 202044839 | A | 01-12-2020 |
| | | | US 2020336735 | A1 | 22-10-2020 |
| | | | WO 2020214670 | A1 | 22-10-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. COBAN ; F. LE LÉANNEC ; K. NASER ; J. STRÖM.** Algorithm description of Enhanced Compression Model 4 (ECM 4). *Joint Video Experts Team (JVET) of ITU-T SG 16 WP 3 and ISO/IEC JTC 1/SC 29, 23rd Meeting,* 07 July 2021, https://jvet-experts.org/doc_end_user/documents/25_Teleconference/wg11/JVET-Y2025-v2.zip

- **M. COBAN ; F. LE LÉANNEC ; K. NASER ; J. STRÖM.** Algorithm description of Enhanced Compression Model 4 (ECM 4). *Joint Video Experts Team (JVET) of ITU-T SG 16 WP 3 and ISO/IEC JTC 1/SC 29, 23rd Meeting, by teleconference,* 07 July 2021, https://jvet-experts.org/doc_end_user/documents/25_Teleconference/wg11/JVET-Y2025-v2.zip